# EUROPEAN PATENT APPLICATION

(11) **EP 4 814 164 A1**
(43) Date of publication of application: **30.09.2026**
(21) Application number: 25315100.5
(22) Date of filing: 28.03.2025
(51) Int. Cl.: C25B 1/04, B01D 53/26, C25B 9/70, C25B 9/73, C25B 15/021, C25B 15/08

(54) **INCLINED GAS COOLER AND APPLICATION TO A HYDROGEN/OXYGEN PRODUCTION SYSTEM**

(71) Applicant: John Cockerill Hydrogen France, 68700 Aspach-Michelbach (FR)
(72) Inventor: Cances, Monsieur Julien, 90150 FOUSSEMAGNE (FR)
(74) Representative: IP Trust

(57) **Abstract**

Piece of equipment (EQ1, EQ2) configured to treat a biphasic mixture output by a stack of electrolytic cells and comprising: a separator (SEP) to separate the biphasic mixture into a gaseous fraction (G) and a liquid electrolyte fraction (LE); a cooler (COOL) configured to cool down the gaseous fraction (G) and to condense water vapor of the gaseous fraction into liquid water, the cooler having a high extremity (BON_{HE}) and a low extremity (BON_{LE}) situated lower than the high extremity (BON_{HE}); and a return line (BCK') configured to transport the liquid water condensed in the cooler (COOL) back to the separator (SEP) and comprising a device (SY) configured to prevent fluid from flowing from the separator (SEP) to the cooler (COOL), wherein an output (OUT.H_{SEP}) of the separator (SEP) is fluidically connected to the low extremity (BON_{LE}) of the cooler (COOL).

## Description

### FIELD OF THE INVENTION

The technical domain of the invention is that of gas-liquid separation equipment integrated into hydrogen and oxygen production systems based on water electrolysis.

### BACKGROUND OF THE INVENTION

Hydrogen (H₂) is an energy vector that is gathering attention due to its potential to be produced in an environmentally friendly manner and to support the emergence of low-carbon emission industrial processes and transportation means.

As for hydrogen production, electrochemical water splitting is a well-known approach that is sustainable and pollution-free.

This approach can be implemented by any type of water electrolyzers - such as alkaline, PEM (Proton Exchange Membrane), or AEM (Anion Exchange Membrane) - in which electrolysis of water H₂O is performed by flowing a direct current of electrons between an anode and a cathode immersed in an aqueous electrolyte contained in an electrolysis cell.

In the case of Alkaline electrolyzer technology, electrons provided at the cathode, by the direct current react with water to produce hydrogen gas and hydroxide ions according to the reaction:

*2H₂O + 2e⁻* → *2H₂* + *2OH⁻*

At the anode, the hydroxide ions release their electrons in excess to produce water and oxygen gas according to the reaction: $2 {OH}^{-} \to \frac{1}{2} {O}_{2} + {H}_{2} O + 2 {e}^{-}$

For a production of hydrogen at an industrial scale, electrolyzers are employed, that comprise stacks that can be made of several hundreds of electrolytic cells each comprising an anode in a first half cell and a cathode in a second half cell, the two half cells being separated by a thin porous membrane, that is a separator non-conductive to electrons, separating the product gases and letting hydroxide ions (OH⁻) pass from the cathode side to the anode side in the case of alkaline and AEM hydrolyzers and protons (H+) from the anode side to the cathode side in the case of PEM hydrolyzers. The membrane separates an electrolysis cell into two half-cells, each half-cell being bathed by a dedicated fluidic circuit. One of the two circuits carries the electrolyte to the stack, then carries a mixture of hydrogen gas and liquid electrolyte out of the stack. The other one of the two circuits carries the electrolyte to the stack, then carries a mixture of oxygen gas and liquid electrolyte out of the stack. The two circuits can be independent from one another, like for example in a dual pump configuration, or can share a common portion, like for example in a single pump configuration.

Oxygen gas and hydrogen gas are the products of interest of the reactions mentioned above and need to be separated from the electrolyte downstream of the stack. In addition, the electrolysis reaction occurs at temperatures usually comprised between 70°C and 90°C, so that the gases need to be cooled down and purified, separated from the electrolyte and from the water that is a byproduct of the hydrogen and oxygen production.

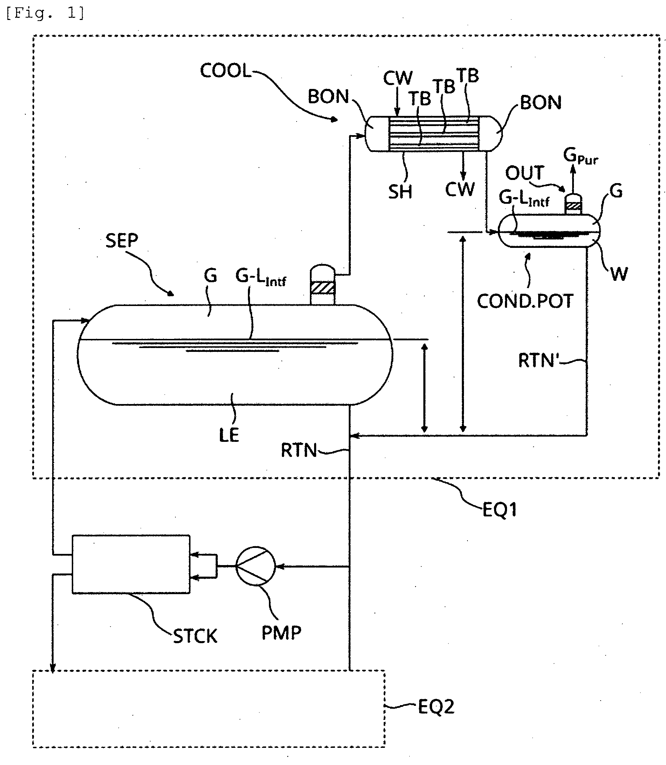

To these ends, the conventional system illustrated by Fig. 1 is employed. Each of the fluidic circuits includes one of two pieces of equipment EQ1 and EQ22, that comprise each a separator SEP, a cooler COOL and a condensate pot COND.POT, and functions as explained below. In Fig. 1, only one of the pieces of equipment is detailed. However, the two pieces of equipment EQ1 and EQ2 can have a same structure. The pieces of equipment are dedicated, respectively, to the cooling and purification of oxygen produced on the anode side of the electrolytic cells and to the hydrogen produced on the cathode side of the electrolytic cells.

As illustrated in Figure 1, an electrolyte/gas (H₂O and one of O₂ and H₂) mixture is brought from the stack STCK to the separator SEP of the piece of equipment EQ1, where the liquid electrolyte LE and the gas G are separated by gravity: the liquid electrolyte LE settles at the bottom while the gas G rises. The liquid electrolyte is sent to a pump PMP via a return line RTN. Finally, the pump drives the liquid electrolyte back to the stack STCK.

In the separator, the gas G is a hot gas of either oxygen or hydrogen, saturated in water vapor. This gas has to be cooled and dried. From the separator, the gas is sent through a cooler COOL.

The cooler COOL is typically a shell-and-tube heat exchanger formed of a plurality of tubes TB fluidically connecting in parallel two bonnets BON located at two opposite extremities of the cooler, an external shell SH encasing the tubes and forming the two bonnets. Typically, cooled water CW is circulated within the shell, bathing the exterior of the tubes, cooling the gas circulating within the tubes TB (the opposite configuration is also possible, but not usually applied for safety concerns: when the hot gas circulates in the tubes, in case of leakage, the hull can still contain the leaking gas). The cooler is horizontally positioned, the two bonnets being at a same height and the tubes extending horizontally.

The gas exiting the cooler COOL goes by gravity to the condensate pot COND.POT that collects condensed water W from the gas and lets the purified oxygen or hydrogen G_{Pur} exit through a purified gas output OUT towards a gas production line. The collected condensed water W is sent by gravity to the return line RTN via a auxiliary return line RTN' to be sent, like the electrolyte EL, to the pump PMP and then back to the stack STCK.

In this arrangement, there is a possibility for the electrolyte circulating in the return line RTN to flood the condensate pot COND.POT by water condensate or electrolyte. If a flood of the electrolyte occurred, the gas productionline may be contaminated or even flooded by water and electrolyte, compromising the quality of the produced gas.

To prevent this pollution, the condensate pot is situated at a higher elevation than the separator, so that backflow of the electrolyte towards the condensate pot can be prevented. If the elevation is not sufficient, the condensates could flood the gas production line, compromise the quality of the produced gas.

However, the elevation of the condensate pot has to take into account (i) the pressure drop (about 50 mBar) occurring when the gas goes through the cooler COOL and (ii) the difference in density between the electrolyte and water, the density of the electrolyte being usually larger than the density of water (25% larger if we consider an electrolyte made essentially of potassium hydroxide KOH). Both factors (i) and (ii) increase the elevation necessary for the condensate pot COND.POT.

To compensate for these factors and to keep a security margin, in a typical hydrogen production industrial system, the condensate pot is about one meter over the separator (we can take as references the anticipated levels of liquid in these elements).

Consequently, the vertical footprint of the piece of equipment illustrated by Fig. 1 becomes large. This generally leads to a need for increased ceiling height, adapted lifting gears and frame, and additional piping. This is also of importance as such pieces of equipment are in some cases assembled in advance and tests such as leak tests are performed prior to sending the assembled piece of equipment as a whole to its final location. So, it is particularly inconvenient or even just impossible to disassemble the piece of equipment prior to its sending. Further, when the vertical footprint becomes such that the height of standard road transportation format is exceeded, transportation by means of special transport means becomes necessary, but this is not desired as it adds to the cost, reduces flexibility, and otherwise complicates the operations.

### OBJECT OF THE INVENTION

In view of the issues above, the applicant proposes a piece of equipment to cool and dry gases obtained from a water electrolyzer, that allows simplifying the process and limiting the total height of the piece of equipment.

### SUMMARY OF THE INVENTION

A first aspect of the invention relates to a piece of equipment configured to treat a biphasic mixture output by a stack of electrolytic cells configured to perform water electrolysis, the piece of equipment comprising: a separator configured to separate by gravity the biphasic mixture into a gaseous fraction and a liquid electrolyte fraction; a cooler configured to cool down the gaseous fraction and to condense water vapor of the gaseous fraction into liquid water, the cooler having an inclination to the horizontal and having a high extremity and a low extremity, the high extremity being situated higher than the low extremity when the equipment is functioning; and a return line configured to transport the liquid water condensed in the cooler back to the separator, the line comprising a device configured to prevent fluid from flowing from the separator to the cooler, wherein the piece of equipment is configured so that an output of the separator is fluidically connected to the low extremity of the cooler so as to guide the gaseous fraction contained by the separator into the low extremity of the cooler.

A first advantage of this equipment is to simplify the equipment conventionally used to treat the two-phase mixture generated by a stack of electrolytic cells.

A second advantage of this equipment is a reduced vertical footprint, facilitating its transport and generally making it easier to mount and transport to its definitive emplacement.

According to further non-imitative features of the first aspect of the invention, either taken alone or in any technically feasible combination:
- the inclination can be comprised between 1% and 10%,
- the cooler can comprise a flowing path for the gaseous fraction, the flowing path having an inclination to the horizontal comprised between 1% and 10%,
- the cooler can be a shell-and-tube heat exchanger;
- the return line can be configured to transport the liquid water condensed in the cooler to a condensate input port of the separator, the condensate input port being located at a top part of the separator, so that, when the piece of equipment is in function, the condensate input port leads to a part of the separator where gas is accumulated;
- the device can be configured to prevent fluid from flowing from the separator to the cooler is a syphon; and
- the syphon can be configured to hold a column of liquid of a height comprised between 3 cm and 30 cm, preferably between 10 cm and 20 cm.

A second aspect of the invention relates to a skid comprising the piece of equipment according the first aspect of the invention, mounted onto a frame.

A third aspect of the invention relates to a gas production system comprising: the piece of equipment according to the first aspect of the invention or the skid according to the second aspect of the invention; at least one stack of electrolytic cells configured to perform water electrolysis, the at least one stack having a first output port fluidically connected to the input port of the separator; and a pump configured to circulate an electrolyte through the stack and the equipment.

According to further non-imitative features of the third aspect of the invention, either taken alone or in any technically feasible combination:
- the at least one stack can comprise a plurality of stacks of electrolytic cells configured to perform water electrolysis, respective first output ports of the stacks being fluidically connected to the input port of the separator;
- the gas production system can comprise another of the piece of equipment according to the first aspect of the invention or the skid according to the second aspect of the invention, respective second output ports of the plurality of stacks being fluidically connected to the input port of the separator of the piece of equipment of the other one of the skid; and
- the gas can be hydrogen or oxygen.

### FIGURES

Other features and advantages of the present invention will become apparent from reading the following detailed description, when considered in conjunction with the accompanying drawings, in which:
- Figure 1 illustrates a piece of equipment destined to hydrogen and/or oxygen production;
- Figure 2 illustrates a variation according to the invention of the piece of equipment of Fig. 1;
- Figure 3 illustrates definitions of an inclination of a cooler to the horizontal; and
- Figure 4 illustrates a piece of equipment destined to hydrogen and/or oxygen production according to the invention.

### DETAILED DESCRIPTION OF A SPECIFIC EMBODIMENT OF THE INVENTION

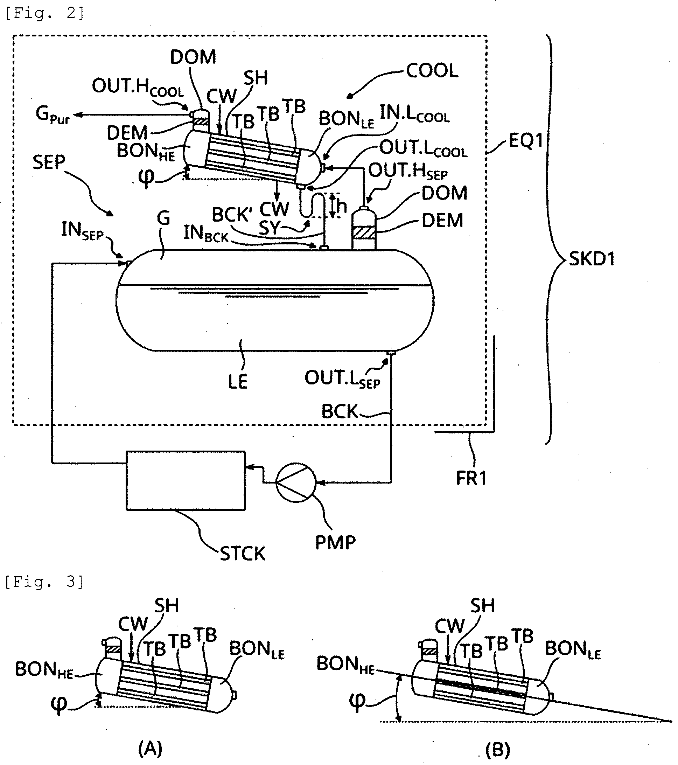

The present invention is described hereunder with the help of Figure 2 to Figure 4. Elements represented on the figures are not to scale, for a better readability. Elements having a same identifier throughout the figures refer to a same element or identical elements.

Fig.2 illustrates a piece of equipment EQ1 configured to treat a two-phase mixture output by a stack STCK of electrolytic cells configured to perform water electrolysis. The design of the piece of equipment EQ1 is explained below, along with a description of its mode of operation.

The stack STCK generates two biphasic hot mixtures, typically between 70 and 90°C: a first one output from the cathode side of the electrolytic cells and made of a liquid electrolyte and a gas made essentially of water vapor and hydrogen gas, and a second one output from the anode side of the electrolytic cells and made of the liquid electrolyte and a gas made essentially of water vapor and oxygen gas. These two mixtures can be treated separately in a parallel processing by two dedicated pieces of equipment EQ1 and EQ2, one for each of the two mixtures, as illustrated by Fig. 1. The two pieces of equipment EQ1 and EQ2 can have a same design. Fig. 2 illustrates generically the design of the piece of equipment EQ1, which can apply to the piece of equipment EQ2.

The equipment EQ1 comprises a separator (SEP) configured to separate by gravity one of the biphasic mixtures outputted by the stack STCK into a gaseous fraction (G) and a liquid electrolyte fraction (LE). The biphasic mixture from the stack STCK is introduced within the separator via an input port IN_{SEP} of the separator.

The liquid electrolyte LE, denser than the gas fraction G of the mixture, sinks down at a bottom part of the separator while the gas fraction accumulates at a top part of the separator. The liquid electrolyte is then output to a back line BCK through a low output port OUT.L_{SEP} located at a low portion of the separator and is guided to a pump PMP that sends it back to the stack STCK, in a closed-loop fashion.

On the other hand, the gaseous fraction G is outputted toward the cooler COOL through a high output port OUT.H_{SEP} of the separator, located at a high point of the separator. In the present embodiment, the separator includes a dome DOM integrating a demister DEM. The high output port OUT.H_{SEP} is located on an upper portion of the dome DOM situated above the demister, so that the hot gas G has to go through the demister DEM to exit the separator. This way, droplets of liquid in suspension are eliminated from the gas prior to being sent to the cooler COOL.

The cooler COOL has an input port IN.L_{COOL} to which the hot gaseous fraction G is brought from the separator, a first output port OUT.H_{COOL} from which cooled purified gas G_{Pur} is extracted, and a second output port OUT.L_{COOL} from which condensates are evacuated and brought back to the separator SEP. Importantly, the cooler has an inclination φ to the horizontal and, consequently, has a high extremity BON_{HE} and a low extremity BON_{LE}, the high extremity BON_{HE} being situated higher than the low extremity BON_{LE} when the equipment is functioning. The input port IN.L_{Cool} and the second output port OUT.L_{COOL} of the cooler are located at the low extremity BON_{LE} of the cooler while the output port OUT.H_{COOL} is located at the high extremity BON_{HE} of the cooler.

The cooler COOL is configured to cool down the gaseous fraction G at the desired temperature for the output gas, and to condense water vapor of the gaseous fraction into liquid water while the gas travel from the low extremity BON_{LE} to which it is inputted into the cooler to the high extremity BON_{HE} from which it is extracted from the cooler. The condensed liquid water falls down to the low extremity BON_{LE} while the cooled, dried, gas is pushed by pressure to the high extremity BON_{HE}.

The inclination φ of the cooler is determined so that condensed water can flow downwards to the low extremity BON_{LE} even though the gas flows upwards from the low extremity BON_{LE} to the high extremity BON_{HE}, which tends to require a high inclination φ. On the other hand, the inclination φ is also determined to minimize the total height of the equipment, which tends to require a low inclination φ, considering that the largest dimension of the cooler COOL is the one separating its two extremities BON_{LE} and BON_{HE}.

It has been determined that, in a specific configuration of an equipment, such as the one illustrated by Fig. 2, values balancing the two criterions above are comprised between 1% and 10% for the inclination, preferably between 2% and 6%. At these inclinations, the vertical footprint of the cooler is minimized, without compromising the downward flow of the condensed water. However, for other configurations, for example when the total height of the equipment may take higher values, the inclination φ may also take higher values, being not limited to 10%, and could reach for example 20%, 45%, 60% or even more.

The inclinations above applies particularly to a shell-and-tube cooler used as the cooler COOL, a structure of which is described above in relation with Fig. 1, in which the extremities BON_{LE} and BON_{HE} and constituted by the two bonnets. In the embodiment, it is preferable that the tubes TB be straight between the two bonnets to allow evacuation of condensed water via the low extremity BON_{LE}.

The inclination φ can be defined as illustrated by FIG. 3.

At (A) of Fig. 3 illustrates that φ can be defined by an angle formed by a horizontal plan and the outer shell of the cooler. This is a straightforward definition, that assumes that the outer shell of the cooler is representative of the inclination of the fluidic path followed by the condensed water, as in the case of a.shell-and-tube heat exchanger in which the tubes are parallel to the direction of extension of a cylindrical shell. Alternatively, φ can be defined by an angle formed by a horizontal plan and a direction of extension of a straight tube in which the water condenses and that fluidically connect the two extremities of the cooler or between the same horizontal plan and a direction of extension of the cooler, as illustrated at (B) of Fig. 3.

Even though the cooler COOL illustrated in Fig. 2 may be a shell-and-tube heat exchanger, heat exchangers of other types may be employed, such as plate exchangers, as long as they can function as described above, with an entry of hot gas at a lower portion and allowing condensed water to fall back to the low portion to be collected and sent back to the separator.

Similarly to the separator SEP, the cooler COOL can be equipped with a dome DOM, comprising another demister DEM, at its high portion. An output port OUT.H_{COOL} of the cooler is located on a high portion of the dome, so that the cooled gas G has to go through the demister DEM to exit the cooler as a dried, purified gas G_{Pur}.

A return line BCK' is configured to transport the liquid water condensed in the cooler COOL back to the separator SEP. The line BCK' fluidically connects the second output port OUT.L_{COOL} to the separator and comprises a device SY configured to prevent fluid from flowing from the separator SEP to the cooler COOL.

The return line BCK' is configured to transport the liquid water condensed in the cooler COOL to a condensate input port IN_{BCK} of the separator SEP. The condensate input port IN_{BCK} is preferably located at a top part of the separator SEP, so that, when the piece of equipment is in function, the condensate input port IN_{BCK} leads to a part of the separator where gas G is accumulated.

Thanks to the design illustrated by Fig. 2, the difference between the pressures inside the low extremity BON_{LE} of the cooler is close to that inside of the separator SEP, and more specifically very similar to the pressure in the top part of the separator, where the condensate input port IN_{BCK} is located. This situation contrasts sharply with the one described in Fig. 1, where the pressure where the condensates accumulate in the condensing pot COND.POT is much lower than the pressure at the level where the auxiliary return line RTN' connects to the return line RTN filled with electrolyte.

As consequence, a simple device is sufficient to impose to the gas G present in the separator to flow to the cooler through the high output port OUT.H_{SEP} of the separator. To this end, the return line can equipped with a device SY configured to prevent fluid from flowing from the separator SEP to the cooler COOL, such as for example a one-way valve. In this embodiment, the device SY is a syphon that is configured to hold a height h of the condensed water. Considering that the difference in pressure between the inside of the separator at the level of the condensate input port IN_{BCK} and the inside of the low extremity BON_{LE} where the output OUT.L_{COOL} is located would be at most equivalent to a few centimeters of water (essentially the pressure drop through a pipe connecting the output port OUT.H_{SEP} of the separator to the input port IN.L_{COOL} of the cooler), a syphon configured to hold a column of liquid of a height h between 3 cm and 30 cm would be sufficient, preferably between 10 cm and 20 cm to keep some margin without impacting too much the vertical height of the equipment.

Further, the design illustrated by Fig. 2 efficiently reduces and practically nullifies the risk of contaminating gas output from the cooler, as the liquid electrolyte is not supposed to reach the ports IN_{BCK} or OUT.H_{SEP}, and even less the output port OUT.H_{COOL}.

The equipment EQ1 can be mounted on to a frame FR1, designed to help holding together the various parts of the equipment and/or provide a support to the equipment. The frame can be equipped with walkways, ladders, or stairs for the maintenance staff. In any event, the various parts forming the equipment EQ1 can form, when mounted together, a skid SKD1 that can be transported as a whole. Thanks to its design, the skid can be compact enough to be transported by standard transportation means, without its height being an issue.

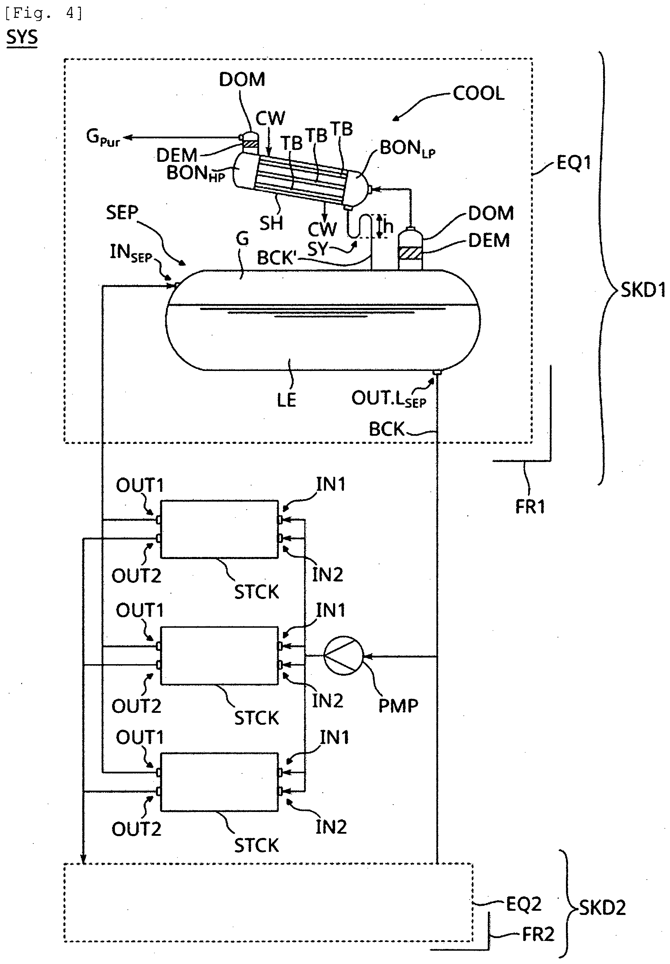

Fig. 4 illustrates a hydrogen gas and oxygen gas production system SYS.

This system SYS comprises a plurality of stack STCK of electrolysis cells, each of the stacks comprising a first input port IN1, a second input port IN2, a first output port OUT1 and a second output port OUT2. In the present document, the term "plurality" means "more than one". Three stacks are illustrated in the example of Fig. 4, but any number of stacks, one stack or a plurality of them, may be employed in the system. The first input ports and the first output ports form respectively entries and exits of the cathode sides of the electrolysis cell while the second input ports and the second output ports form respectively entries and exits to the anode sides of the electrolysis cell.

The first output ports OUT1 are fluidically connected to the separator SEP of the first piece of equipment EQ1 and the second output ports are fluidically connected to the separator SEP of a second piece of equipment EQ2, having the same structure as the first piece of equipment EQ1. Both pieces of equipment can be illustrated by the piece of equipment EQ1 of Fig. 2 and the corresponding passages of the description.

Output ports OUT.L_{SEP} of the separators of the two pieces of equipment EQ1 and EQ2 are, in the configuration of Fig. 4, fluidically connected to a pump PMP, that drives the electrolyte back to the input ports IN1 and IN2 of the stacks STCK. An alternative configuration would be to use two pumps, each dedicated to one of the pieces of equipment EQ1 and EQ2 and connected to either the input ports IN1 or to the input ports IN2 to form a so-called dual-pump configuration.

In the example of Fig. 4, the pieces of equipment EQ1 and EQ2 separate respectively hydrogen gas H₂ and oxygen gas O₂ from biphasic mixtures generated by the stacks and output these gases as purified gases G_{Pur} extracted from the coolers COOL of the pieces of equipment EQ1 and EQ2.

The two pieces of equipment EQ1 and EQ2 can form skids SK1 and SKD2, respectively, and be mounted on respective frames FR1 and FR2.

Only elements of the system SYS and of the pieces of equipment EQ1 and EQ2 necessary to explain the invention have been mentioned and described. However, it will be understood by persons skilled in the field that a number of additional elements can be present, such as valves, pumps, fluidic lines, sensors or control circuit.

Other variations to the disclosed examples can be understood and effected by those skilled in the art in practicing the claimed invention, from a study of the drawings, the disclosure, and the appended claims.

## Claims

1. Piece of equipment (EQ1, EQ2) configured to treat a biphasic mixture output by a stack of electrolytic cells configured to perform water electrolysis, the piece of equipment comprising:
- a separator (SEP) configured to separate by gravity the biphasic mixture into a gaseous fraction (G) and a liquid electrolyte fraction (LE);
- a cooler (COOL) configured to cool down the gaseous fraction (G) and to condense water vapor of the gaseous fraction into liquid water, the cooler having an inclination (φ) to the horizontal and having a high extremity (BON_{HE}) and a low extremity (BON_{LE}), the high extremity (BON_{HE}) being situated higher than the low extremity (BON_{LE}) when the equipment is functioning; and
- a return line (BCK') configured to transport the liquid water condensed in the cooler (COOL) back to the separator (SEP), the line (BCK') comprising a device (SY) configured to prevent fluid from flowing from the separator (SEP) to the cooler (COOL), wherein the piece of equipment is configured so that an output (OUT.H_{SEP}) of the separator (SEP) is fluidically connected to the low extremity (BON_{LE}) of the cooler (COOL) so as to guide the gaseous fraction (G) contained by the separator (SEP) into the low extremity (BON_{LE}) of the cooler (COOL).

2. The piece of equipment according to claim 1, wherein the inclination (φ) is comprised between 1% and 10%.

3. The piece of equipment according to claim 1, wherein the cooler (COOL) comprises a flowing path (TB) for the gaseous fraction, the flowing path having a inclination to the horizontal, comprised between 1% and 10%.

4. The piece of equipment according to any one of claims 1 to 3, wherein the cooler (COOL) is a shell-and-tube heat exchanger.

5. The piece of equipment according to any one of claims 1 to 4, wherein the return line (BCK') is configured to transport the liquid water condensed in the cooler (COOL) to a condensate input port (IN_{BCK}) of the separator (SEP), the condensate input port (IN_{BCK}) being located at a top part of the separator (SEP), so that, when the piece of equipment is in function, the condensate input port (IN_{BCK}) leads to a part of the separator where gas (G) is accumulated.

6. The piece of equipment according to any one of claims 1 to 5, wherein the device (SY) configured to prevent fluid from flowing from the separator (SEP) to the cooler (COOL) is a syphon.

7. The piece of equipment according to any one of claims 1 to 6, wherein the syphon is configured to hold a column of liquid of a height (h) comprised between 3 cm and 30 cm, preferably between 10 cm and 20 cm.

8. Skid (SKD) comprising the piece of equipment (EQ1, EQ2) according to any of claims 1 to 7 mounted onto a frame (FR).

9. Gas production system (SYS) comprising:
- the piece of equipment according to any one of claims 1 to 7 or the skid according to claim 8;
- at least one stack (STCK) of electrolytic cells configured to perform water electrolysis, the at least one stack having a first output port (OUT1) fluidically connected to the input port (IN_{SEP}) of the separator (SEP); and
- a pump (PMP) configured to circulate an electrolyte through the stack (STCK) and the equipment (EQ1) according to claim 1.

10. The gas production system according to claim 9, the at least one stack comprising a plurality of stacks (STCK) of electrolytic cells configured to perform water electrolysis, respective first output ports (OUT1) of the stacks being fluidically connected to the input port (IN_{SEP}) of the separator (SEP).

11. The gas production system according to claim 10, comprising another of the piece of equipment according to any one of claims 1 to 7 or the skid according to claim 8, respective second output ports (OUT1) of the plurality of stacks being fluidically connected to the input port (IN_{SEP}) of the separator (SEP) of the piece of equipment (EQ2) of the other one of the skid(SKD).

12. The gas production system according to any one of claims 9 to 11, the gas being hydrogen or oxygen.
